# EUROPÄISCHE PATENTANMELDUNG

(11) **EP 0 698 998 A1**
(43) Veröffentlichungstag der Anmeldung: **28.02.1996**
(21) Anmeldenummer: 95112687.9
(22) Anmeldetag: 11.08.1995
(51) Int. Cl.: H04N 7/173

(54) **Verfahren und Schaltungsanordnung zur Steuerung eines Verbindungsaufbaus für interaktive Dienste**

(30) Priorität: 24.08.1994 DE 4430051
(71) Anmelder: SIEMENS AKTIENGESELLSCHAFT, D-80333 München (DE)
(72) Erfinder: Totzke, Jürgen, Dipl. Inform., D-85586 Poing (DE); von der Straten, Gernot, Dr., D-82327 Tutzing (DE)

(57) **Zusammenfassung**

Zur Steuerung interaktiver Videodienste werden sog. Set Top Boxen verwendet. Um im Netz abgespeicherte Video Filme auszuwählen und zu betrachten, wird erfindungsgemäß von der Set Top Box ein Verbindungsaufbau automatisch mit Hilfe eines standardisierten Signalisierungsverfahrens zu der betreffenden Speichereinrichtung gesteuert.

## Beschreibung

Die Erfindung betrifft ein Verfahren gemäß dem Oberbegriff des Patentanspruchs 1.

Heute werden Dienste, die mehrere Medien wie z.B. Audio, Video und Daten integrieren und dem Teilnehmer Interaktionen erlauben unter dem Sammelbegriff MULTIMEDIA -Dienste zusammengefaßt. Darunter werden spezielle Dienste, wie beispielsweise HOME-SHOPPING, VIDEO ON DEMAND oder DISTANT-LEARNING verstanden, die von einer, beim Teilnehmer installierten Endeinrichtung in Anspruch genommen werden. Es ist naheliegend, als solche Endeinrichtungen Fernsehgeräte zu benutzen, da diese zum einen bereits in großer Zahl beim Teilnehmer vorhanden sind, und zum anderen dem Teilnehmer die Möglichkeit bieten, auf optischem oder akustischem Wege einen Dialog mit demjeweiligen Diensteanbieter zu führen.

Zu diesem Zweck werden zur Behandlung dieser Abläufe spezielle Steuervorrichtungen eingesetzt. Diese Steuervorrichtungen werden als Set Top Boxen bezeichnet und als Zusatzeinrichtung einem Fernsehgerät zugeschaltet. In der Regel werden sie in die, dem Fernsehgerät zugeführte Verbindungsleitung eingefügt. Einfache Set Top Boxen können dabei zusätzliche Fernsehkanäle wie z.B. Pay-TV decodieren und die entsprechenden Informationen am Bildschirm desjeweiligen Fernsehgerätes darstellen. Leistungsfähigere Set Top Boxen können interaktiv vom Teilnehmer mit Hilfe einer Fernbedienung zur Nutzung der oben angesprochenen speziellen Dienste angesteuert werden. Der technologische Trend zu immer leistungsfähigeren und kostengünstigeren Speichern hat dazu geführt, daß insbesondere der Anruf von Video Filmen (VIDEO ON DEMAND) technisch realisierbar geworden ist und auch zunehmend von den verantwortlichen Diensteanbietern bereitgestellt wird. Videofilme sind in komprimierter Form in großen digitalen Speichervorrichtungen (Video Server) abgespeichert, die die Funktion eines Content Providers aus Sicht des Teilnehmers erbringen.

Bisher werden solche interaktiven Dienste lediglich in Feldversuchen in den USA angeboten. Dabei wird eine Verbindung zwischen einer der Set Top Boxen und dem Video Server, der den gewünschten Video Film enthält, aufgebaut. Die Verbindung wird dabei über Cross-Connectoreinrichtungen fest geschaltet (Festverbindungen). Über diese festgeschaltete Verbindung werden dann die gewünschten Informationen (z.B. Video Film) dem Teilnehmer zugeführt und am Fernsehgerät dargestellt. Die entsprechenden Verhältnisse sind in "IEEE Communications Magazine, May 1994, Interactive Video on demand" angesprochen.

Problematisch daran ist jedoch, daß eine derartige Verbindung immer nur mit einer gewissen Zeitverzögerung erstellt werden kann, da die entsprechenden Einstellungen auf eine Nachricht vom betreffenden Teilnehmer hin über ein zentrales Netzwerkverwaltungssystem in allen an der Verbindung beteiligten Netzknoten erfolgen muß. Möchte beispielsweise der Teilnehmer während der Betrachtung eines Video Filmes einen anderen Film anschauen, der in einem anderen Content Provider gespeichert ist, so kann die damit verbundene Umadressierung nur innerhalb der eben angesprochenen Zeitspanne vorgenommen werden. Im übrigen werden aus der beim Stand der Technik bekannten Vorgehensweise, bei der Festverbindungen geschaltet werden, Netzresourcen bis zum Auswahlrechner (Level 1 Gateway) für die Content Provider verbraucht.

Der Erfindung liegt die Aufgabe zugrunde, ein Verfahren zum Verbindungsaufbau für interaktive Video-Dienste anzugeben, mittels dem der Verbindungsaufbau schnell und effizient durchgeführt werden kann.

Die Erfindung wird, ausgehend vom Oberbegriff des Patentanspruchs 1, durch die Merkmale des kennzeichnenden Teils gelöst.

Vorteilhaft an der Erfindung ist, daß von einer der Steuervorrichtungen nach Maßgabe eines extern zugeführten Steuersignals ein Verbindungaufbau zu der gewünschten Speichervorrichtung mit Hilfe eines standardisierten Realzeit-Signalisierungsverfahren automatisch gesteuert wird. Damit ist der Vorteil verbunden, daß die gewünschte Verbindung unmittelbar nach Realzeitbedingungen erstellt wird. Ein weiterer Vorteil ergibt sich daraus, daß die Verbindung nur während der Übertragung der gewünschten Informationen besteht und anschließend wieder ausgelöst wird, wodurch einer möglichen Überlastung des Netzes entgegengewirkt wird. Außerdem werden die benötigten Verbindungsabschnitte link-by-link bereitgestellt, womit die in Netzen üblicherweise realisierten Ersatzschaltungen bei Netz-oder Leitungsfehlern automatisch mit genutzt werden können. Im übrigen werden die Netzressourcen nur bis zum ersten Netzknoten belegt, da die Signalisierungsverbindung von der Steuervorrichtung bereits hier terminiert werden.

Weitere Ausgestaltungen der Erfindung sind in den Unteransprüchen angegeben.

Gemäß Anspruch 2 ist vorgesehen, daß zwischen einer der Steuervorrichtungen und einer der Speichervorrichtungen zwei Verbindungen aufgebaut werden, wobei nach Abschluß des Verbindungsaufbaus über die eine dieser Verbindungen die Nutzinformationen breitbandig und über die verbleibende dieser Verbindungen die Steuerinformationen schmalbandig übertragen werden. Damit ist der Vorteil verbunden, daß die Signale gängiger Codierungsverfahren für Audio/Video-Signale wie z.B. das bekannte MPEG-Verfahren zwischen den beiden Einrichtungen übertragen werden können.

Gemäß Anspruch 3 ist vorgesehen, daß die Informationen zwischen einer der Steuervorrichtungen und der jeweiligen Speichervorrichtung gemäß einem nach einem asynchronen Transfermodus fungierenden Übertragungsverfahren übertragen werden. Damit ist der Vorteil verbunden, daß die Übertragung der Videodignale breitbandig von der betreffenden Speichervorrichtung zum Teilnehmer durchgeführt werden kann.

Gemäß Anspruch 4 ist vorgesehen, daß die jeweilige Speichervorrichtung von der jeweiligen Steuervorrichtung zum Zwecke des Verbindungsaufbaus indirekt adressiert wird. Damit ist der Vorteil verbunden, daß eine Identifizierung des Teilnehmers vom Anbieter der Videodienste nicht durchgeführt werden kann. Weiterhin ist es damit möglich, die Verbindung in Abhängigkeit von Ort, Datum und/oder Uhrzeit zu schalten.

Gemäß Anspruch 5 ist vorgesehen, daß für die Zeitspanne des Bestehens der zumindest einen Verbindung eine zeitabhängige, volumenabhängige und gegebenenfalls inhaltsabhängige Vergebührung durchgeführt wird. Damit ist der Vorteil verbunden, daß die Netzresourcen effizient genutzt werden. Weiterhin kann der Netzbetreiber demjeweiligen Teilnehemer durch Zulieferung der inhaltsabhängigen Gebühreninformation durch den Betreiber der Speichervorrichtung eine Rechnung im Hinblick auf z.B. Zeit, Volumen/Bandbreite und Inhalt der Verbindung erstellen.

Gemäß Anspruch 6 ist vorgesehen, daß von den genannten Nutzinformationen abweichende Ntuzinformationen über die verbleibende dieser Verbindungen schmalbandig übertragen werden. Damit ist der Vorteil verbunden, daß beispielsweise für die Übertragung von Text, einfachen Graphiken u.ä. keine breitbandige Verbindung belegt wird.

Gemäß Anspruch 7 ist insbesondere vorgesehen, daß die Steuervorrichtungen, die Speichervorrichtungen sowie der Netzknoten den Anforderungen für Netzelemente der intelligenten Netze genügen. Damit ist der Vorteil verbunden, daß die in den intelligenten Netzen realisierten Dienste mitbenutzt werden können.

Gemäß Anspruch 8 ist vorgesehen, daß die jeweilige Steuervorrichtung in der jeweils zugeordneten Endeinrichtung integriert wird. Damit ist der Vorteil verbunden, daß neue Endeinrichtungen wie z.B. Fernsehgeräte problemlos in dieses Konzept integrierbar sind.

Die Erfindung wird im folgenden anhand eines Ausführungsbeispiels näher erläutert.

Es zeigen:
- Figur 1: eine Anordnung, mittels der das erfindungsgemäße Verfahren zum Ablauf gelangt,
- Figur 2: das erfindungsgemäße Verfahren anhand einer Signalisierungsprozedur, wie sie beim Verbindungsaufbau in intelligenten Netzen benutzt wird.

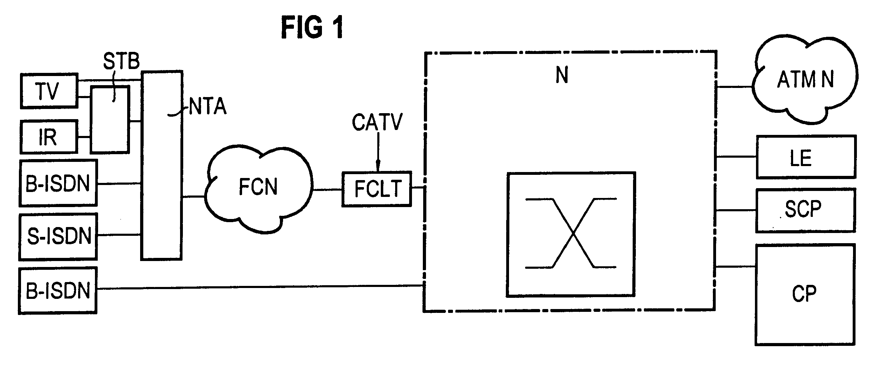

Fig.1 zeigt eine Anordnung nach dem Konzept der intelligenten Netze (Intelligent Network, IN). Darin ist ein Netzknoten SSP aufgezeigt.Im vorliegenden Ausführungsbeispiel werden die Informationen nach dem bekannten ATM-Übertragungsverfahren den einzelnen Endeinrichtungen zugeleitet; aus diesem Grund ist der Netzknoten SSP als ATM-Netzknoten ausgestaltet. Am Netzknoten SSP sind weitere Einrichtungen des ATM-Netzes ATMN angeschlossen. Weiterhin ist derselbe mit ISDN-Ortsämtern LE verbunden. Eine Speichervorrichtung CP, ist ebenfalls an dem Netzknoten SSP angeschlossen. Im vorliegenden Ausführungsbeispiel ist sie als Video Server, der die Content Provider Funktion CP erbringt, ausgestaltet. Im Ausführungsbeispiel ist lediglich eine Speichervorrichtung CP angesprochen, obwohl eine Vielzahl derselben am Netzknoten SSP und auch an weiteren Netzknoten vorhanden sein kann. Weiterhin ist am Netzknoten SSP eine Einrichtung FCLT im Sinne eines Access Networks angeschaltet. Über sie werden die zu übertragenden Informationen über ein Glasfaser-/Koaxialkabelnetz FCN einer Netzabschlußeinrichtung NTA zugeführt, wobei in die Einrichtung FCLT Signale für konventionelles Kabelfernsehen CATV eingespeist werden. An die Netzabschlußeinrichtung NTA ist über eine als Set Top Box STB ausgestaltete Steuervorrichtung ein Fernsehgerät TV bzw. eine Infrarot-Handbedienung IR angeschaltet. Weiterhin sind an die Netzabschlußeinrichtung NTA Breitband-bzw. Schmalbandendgräte für ISDN-Teilnehmer angeschlossen, wobei Breitband-Teeilnehmer auch direkt an den Netzknoten SSP heranführbar sind.

Im folgenden soll das erfindungsgemäße Verfahren, wie es auf einer Anordnung nach Fig.1 abläuft, näher erläutert werden. Erfindungsgemäß soll von einer Set Top Box STB ein Verbindungsaufbau zu einem Content Provider CP durchgeführt werden. Dazu wird ein an sich bekanntes Realzeit-Signalisierungsverfahren verwendet. Der Verbindungsaufbau wird von einem externen Steuersignal gestartet. Dieses wird von einem Teilnehmer über eine Infrarot-Handbedienung IR der Set Top Box STB zugeführt. In Abhängigkeit von diesem externen Steuersignal wird nun die Verbindung gemäß dem standardisierten Realzeit-Signalisierungsverfahren erstellt.

Zunächst wird eine erste Verbindung C erstellt, die in der Lage ist, schmalbandige Steuerinformationen zu übertragen.

Dabei handelt es sich beispielsweise um Steuerinformationen zur Menüauswahl. Ist der entsprechende Auswahlwunsch über diese Steuerverbindung C bestätigt, wird eine breitbandige Nutzverbindung U erstellt, über die der Content Provider CP den ausgewählten Film in Form von Videosignalen zum Fernsehgerät TV hin überträgt. Die Videosignale werden über diese Nutzverbindung U breitbandig übertragen. Besteht von seiten des Teilnehmers kein weiterer Wunsch mehr, den Video Film zu betrachten, werden beide Verbindungen ausgelöst. Für die Dauer des Bestehens der Verbindung wird eine zeitabhängige Vergebührung durchgeführt. Die Einbindung in das intelligente Netz IN hat den Vorteil, daß auch die dort realisierten höheren Dienste mitbenutzt werden können. So kann z.B. ein Video Film ausgewählt werden und mit einer Kreditkarte (CREDIT CARD CALLING) bezahlt werden. Weiterhin wird im Ausführungsbeispiel insbesondere der Abruf von Video Filmen angesprochen. Allerdings ist die Erfindung nicht allein auf diesen Dienst beschränkt. So können alle Dienste abgerufen werden, die von einem Content Provider CP an beliebiger Stelle im Netz IN angeboten werden. Auch ist die Benutzung der breitbandigen Nutzverbindung U zur Übertragung der Nutzinformationen nicht zwingend. Soll z.B. eine zeichenorientierte Darstellung, wie sie beispielsweise vom Video Text bekannt ist, auf dem Fernsehgerät TV dargestellt werden, kann ebenso die Steuerverbindung C zur Übertragung dieser Informationen mitbenutzt werden.

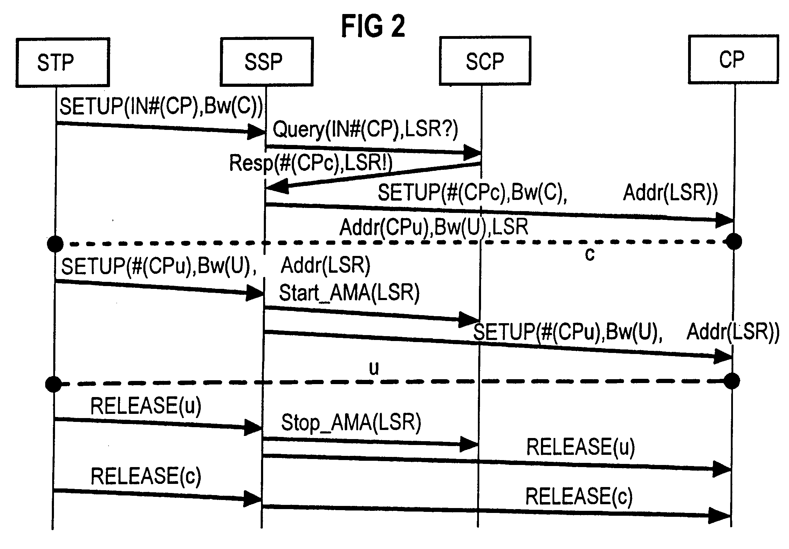

In Fig.2 sind die entsprechenden Verhältnisse während des Verbindungsaufbaus innerhalb des intelligenten Netzes IN aufgezeigt. Dieses weist einen Netzknoten SSP sowie einen Rechner SCP auf, wobei letzterer nach der Definition der intelligenten Netze als Service Control Point zu bezeichnen ist. Der Netzknoten SSP besitzt Durchschaltefunktion, unterstützt die Vergebührung und triggert die IN Dienste, während der Rechner SCP für die IN-Dienstesteuerung verantwortlich ist. Zunächst soll also von der Set Top Box STB nach Maßgabe des externen Steuersignals eine Verbindung zu irgeneinem Content Provider CP erstellt werden. Zu diesem Zweck wird dem Netzknoten SSP ein SETUP-Kommando übergeben. Diesem werden noch zusätzliche Informationen in Form einer Kennung mitgegeben, wobei letztere aus den Parametern IN#(CP) und Bw(C) bestehen. Dabei bedeutet der Parameter IN#(CP), daß ein interaktiver Video-Dienst gewünscht wird, während der Parameter Bw(C) signalisiert, welche Bandbreite für die Steuerverbindung C notwendig ist. Im Netzknoten SSP werden diese Information ausgewertet und dem Rechner SCP mit einem weiteren Kommando QUERY ein Parameter LSR abgefragt. Damit ist die direkte Adressierung ausgehend von der Set Top Box STB zum Content Provider CP unterbrochen. Mit einem Quittungskommando RESP wird dem Netzknoten SSP vom Rechner SCP die Parameter #(CPc) und LSR mitgeteilt. Insbesondere durch letztere wird die Zuordungen der betreffenden Steuerverbindung zur zugehörigen Nutzverbindung ermöglicht. Zum anderen ist im Parameter #(CPc) die reale Netzadresse des adressierten Content Providers CP enthalten. Die entsprechenden Berechnungen wurden im Rechner SCP durchgeführt und sind dort auch abgespeichert. Im Netzknoten SSP werden diese Informationen ausgewertet und teilweise umgesetzt. Inbesondere wird die Information dem Parameter LSR entnommen, die eine Identifizierung des den Verbindungsaufbau initiierenden Teilnehmers von Seiten des Content Providers CP erlaubt und die derart entstandene Information einem Parameter ADDR zugefügt.

Im folgenden wird die Adressierung zum Content Provider CP fortgesetzt, indem vom Netzknoten SSP ein SETUP-Kommando dem Content Provider CP zugeführt wird. Als Parameter werden der Parameter #(CPc), der Parameter Bw(C) und der Parameter ADDR mitübergeben. Insbesondere ist es damit von seiten des Diensteanbieters, der seine Informationen in der Speichervorrichtung CP anbietet, nicht möglich, dem anrufenden Teilnehmer, repräsentiert durch die Steuereinrichtung STB zu identifizieren. Die Zuordnung ist lediglich dem Netzbetreiber über den Zugriff im Rechner SCP bekannt. Nach Empfang des SETUP Kommandos durch den Content Provider CP wird die schmalbandige Steuerverbindung C aufgebaut.

Über die Steuerverbindung C werden zunächst zwischen der Set Top Box STB und dem Content Provider CP Informationen ausgetauscht. Beispielsweise werden die Parameter ADDR(CPu), Bw(U) und LSR übergeben. Im Anschluß daran werden dann z.B. die zur Menüsteuerung notwendigen Steuerdaten hierüber ausgetauscht. Ist der gewünschte Video Film ausgewählt und markiert,erfolgt im Anschluß daran der Aufbau der breitbandigen Verbindung, über die dann die Video-Signale übertragen werden. Zu diesem Zweck wird von der Set Top Box STB ein weiteres SETUP Kommand dem Netzknoten SSP übergeben. Als Kennung werden die Parameter #(CPu), Bw(U) und ADDR(LSR) mitgeführt. Dabei enthält der Parameter Bw(U) die Bandbreite für die zu übertragenden Video Signale. Daraufhin wird von dem Netzknoten SSP eine zeitabhängige Vergebührung mit Hilfe eines, dem Rechner SCP übergebenen START_AMA(LSR) Kommandos initiiert. Gleichzeitig hierzu wird dem Content Provider CP das SETUP Kommando weitergereicht, woraufhin das Erstellen der breitbandigen Nutzverbindung U durchgeführt wird. Darüber werden dann die Video Signale zum Fernsehgerät TV des Teilnehmers übertragen.

Ist der ausgewählte Video Film beendet bzw.besteht der Wunsch nach einem weiteren Video Film nicht, so wird von seiten der Set Top Box STB zuerst die Nuzverbindung U und danach die Steuerverbindung C ausgelöst. Dies erfolgt, indem zunächst dem Netzknoten SSP ein Kommando RELEASE(u) übergeben wird. Dieses Kommando wird dann zum Content Provider CP weitergereicht. Parallel dazu wird die zeitabhängige Vergebührung gestoppt, indem dem Rechner SCP das Kommando STOP_AMA(LSR) übergeben wird. Hat der Content Provider CP das Kommando RELEASE(u) erhalten, ist die breitbandige Nutzverbindung U ausgelöst. Die schmalbandige Steuerverbindung C steht noch. Letztere wird ausgelöst, indem ein Kommando RELEASE(c) dem Netzknoten SSP und dem Content Provider CP übergeben wird. Die Verbindung ist damit beendet.

## Patentansprüche

1. Verfahren zur Verbindungssteuerung für interaktive Dienste mit einer Mehrzahl von Steuervorrichtungen (STB), die jeweils einer Endeinrichtung (TV) zugeordnet sind, und mit einem der Durchschaltung von Informationen dienenden Netzknoten (SSP), an den die Mehrzahl von Steuervorrichtungen (STB) sowie zumindest eine Speichervorrichtung (CP) angeschlossen sind, und über den Informationen von jeweils einer der Speichervorrichtungen (CP) zu jeweils einer der Steuervorrichtungen (STB) und umgekehrt mit Hilfe einer bestehenden Verbindung geleitet werden
**dadurch gekennzeichnet,**
daß von einer der Steuervorrichtungen (STB) nach Maßgabe eines externen Steuersignals zumindest eine Verbindung mit Hilfe eines standardisierten Realzeit-Signalisierungsverfahrens zu der jeweiligen Speichervorrichtung (CP) selbsttätig aufgebaut wird, über die dann für die Dauer ihres Bestehens Informationen, insbesondere Nutz- bzw. Steuerinformationen ausgetauscht werden.

2. Verfahren nach Anspruch 1,
**dadurch gekennzeichnet,**
daß zwischen einer der Steuervorrichtungen (STB) und einer der Speichervorrichtungen (CP) zwei Verbindungen aufgebaut werden, wobei nach Abschluß des Verbindungsaufbaus über die eine dieser Verbindungen (U) die Nutzinformationen breitbandig und über die verbleibende dieser Verbindungen (C) die Steuerinformationen schmalbandig übertragen werden.

3. Verfahren nach Anspruch 1 oder 2,
**dadurch gekennzeichnet,**
daß die Informationen zwischen einer der Steuervorrichtungen (STB) und der jeweiligen Speichervorrichtung (CP) gemäß einem nach einem asynchronen Transfermodus (ATM) fungierenden Übertragungsverfahren übertragen werden.

4. Verfahren nach Anspruch 1,2 oder 3
**dadurch gekennzeichnet,**
daß die jeweilige Speichervorrichtung (CP) von der jeweiligen Steuervorrichtung (STB) zum Zwecke des Verbindungsaufbaus indirekt adressiert wird.

5. Verfahren nach Anspruch 1 bis 4,
**dadurch gekennzeichnet,**
daß für die Zeitspanne des Bestehens der zumindest einen Verbindung (U) eine zeitabhängige, volumenabhängige und gegebenenfalls eine inhaltsabhängige Vergebührung durchgeführt wird.

6. Verfahren nach Anspruch 2,
**dadurch gekennzeichnet,**
daß von den genannten Nutzinformationen abweichende Nutzinformationen über die verbleibende dieser Verbindungen (C) schmalbandig übertragen werden.

7. Schaltungsanordnung zur Verbindungssteuerung für interaktive Dienste mit einer Mehrzahl von Steuervorrichtungen (STB), die jeweils einer Endeinrichtung (TV) zugeordnet sind,und mit einem der Durchschaltung von Informationen dienenden Netzknoten (SSP), an den die Mehrzahl von Steuervorrichtungen (STB) sowie zumindest eine Speichervorrichtung (CP) angeschlossen sind, und über den Informationen von jeweils einer der Speichervorrichtungen (CP) zu jeweils einer der Steuervorrichtungen (STB) und umgekehrt mit Hilfe einer bestehenden Verbindung geleitet werden, zur Durchführung des Verfahrens nach einem der Ansprüche 1 bis 6
**dadurch gekennzeichnet,**
daß die Steuervorrichtung (STB) und die zumindest eine Speichervorrichtung (CP) derart ausgebildet sind, daß von einer der Steuervorrichtungen (STB) nach Maßgabe eines externen Steuersignals zumindest eine Verbindung mit Hilfe eines standardisierten Realzeit-Signalisierungsverfahrens zu der jeweiligen Speichervorrichtung (CP) selbsttätig aufgebaut wird, über die dann für die Dauer ihres Bestehens Informationen, insbesondere Nutz- bzw. Steuerinformationen ausgetauscht werden, und
daß die Mehrzahl von Steuervorrichtungen (STB), die zumindest eine Speichervorrichtung (CP) sowie der Netzknoten (SSP) den Anforderungen für Netzelemente der intelligenten Netze (IN) genügen.

8. Schaltungsanordnung nach Anspruch 7
**dadurch gekennzeichnet,**
daß die jeweilige Steuervorrichtung (STB) in der jeweils zugeordneten Endeinrichtung (TV) integriert ist.
